# EUROPEAN PATENT APPLICATION

(11) **EP 4 672 766 A1**
(43) Date of publication of application: **31.12.2025**
(21) Application number: 24759633.1
(22) Date of filing: 19.02.2024
(51) Int. Cl.: H04N 21/482, G06F 3/0484, H04N 21/2187, H04N 21/4788

(54) **INTERACTION METHOD AND APPARATUS, ELECTRONIC DEVICE, STORAGE MEDIUM, AND PROGRAM PRODUCT**

(30) Priority: 20.02.2023 CN 202310140400
(71) Applicant: Beijing Zitiao Network Technology Co., Ltd., Beijing 100190 (CN)
(72) Inventor: LIN, Ping, Beijing 100028 (CN); LAI, Ke, Beijing 100028 (CN); JIANG, Kun, Beijing 100028 (CN)
(74) Representative: Isarpatent
(86) International application number: PCT/CN2024/077527
(87) International publication number: WO 2024/174956

(57) **Abstract**

Embodiments of the present disclosure provide an interaction method and apparatus, an electronic device, a storage medium, and a program product. The method comprises : receiving a list display operation of a current user for a target list, wherein the list display operation comprises a first trigger operation acting on a first live streaming page, the target list is an associated host list where a first host is located, the first host is a host of the first live streaming page, and the target list is created by a target host in the target list; and in response to the list display operation, displaying the target list.

## Description

### CROSS-REFERENCE TO RELATED APPLICATIONS

The present application is based on and claims priority to Chinese Application No. 202310140400.1, filed on February 20, 2023, which is incorporated herein by reference in its entirety.

### TECHNICAL FIELD

Embodiments of the present disclosure relate to the field of computer technologies, and in particular, to an interaction method and apparatus, an electronic device, a storage medium, and a program product.

### BACKGROUND

With the rapid development of the Internet, video applications become increasingly diverse, for example, a live streaming room can be set up in the video application for user interaction.

### SUMMARY

According to a first aspect, an embodiment of the present disclosure provides an interaction method, including:
receiving a list display operation of a current user for a target list, where the list display operation includes a first trigger operation performed on a first live streaming page, the target list is an associated streamer list that a first streamer is in, the first streamer is a streamer of the first live streaming page, and the target list is created by a target streamer in the target list; and
displaying the target list in response to the list display operation.

According to a second aspect, an embodiment of the present disclosure further provides an interaction apparatus, including:
a receiving module configured to receive a list display operation of a current user for a target list, where the list display operation includes a first trigger operation performed on a first live streaming page, the target list is an associated streamer list that a first streamer is in, the first streamer is a streamer of the first live streaming page, and the target list is created by a target streamer in the target list; and
a first response module configured to display the target list in response to the list display operation.

According to a third aspect, an embodiment of the present disclosure further provides an electronic device, including:
one or more processors; and
a memory configured to store one or more programs, where
the one or more programs, when executed by the one or more processors, cause the one or more processors to implement the interaction method described in the embodiments of the present disclosure.

According to a fourth aspect, an embodiment of the present disclosure further provides a computer-readable storage medium having a computer program stored thereon. The program, when executed by a processor, causes the interaction method described in the embodiments of the present disclosure to be implemented.

According to a fifth aspect, an embodiment of the present disclosure further provides a computer program product. The computer program product, when executed by a computer, causes the computer to implement the interaction method described in the embodiments of the present disclosure.

According to a fifth aspect, an embodiment of the present disclosure further provides a computer program, including instructions that, when executed by a processor, cause the processor to perform the interaction method described in the embodiments of the present disclosure.

### BRIEF DESCRIPTION OF THE DRAWINGS

The foregoing and other features, advantages, and aspects of embodiments of the present disclosure become more apparent with reference to the accompanying drawings and the following detailed description of embodiments. Throughout the accompanying drawings, the same or similar reference signs denote the same or similar elements. It should be understood that the accompanying drawings are schematic and that parts and elements are not necessarily drawn to scale.
FIG. 1 is a schematic flowchart of an interaction method according to an embodiment of the present disclosure;
FIG. 2 is a schematic diagram of displaying a target list according to an embodiment of the present disclosure;
FIG. 3 is a schematic diagram of displaying an associated panel according to an embodiment of the present disclosure;
FIG. 4 is another schematic diagram of displaying an associated panel according to an embodiment of the present disclosure;
FIG. 5 is a schematic flowchart of another interaction method according to an embodiment of the present disclosure;
FIG. 6 is a schematic diagram of displaying a second live streaming page according to an embodiment of the present disclosure;
FIG. 7 is a schematic diagram of a structure of an interaction apparatus according to an embodiment of the present disclosure; and
FIG. 8 is a schematic diagram of a structure of an electronic device according to an embodiment of the present disclosure.

### DETAILED DESCRIPTION

The embodiments of the present disclosure are described in more detail below with reference to the accompanying drawings. Although some embodiments of the present disclosure are shown in the accompanying drawings, it should be understood that the present disclosure may be implemented in various forms and should not be construed as being limited to the embodiments set forth herein. Rather, these embodiments are provided for a more thorough and complete understanding of the present disclosure. It should be understood that the accompanying drawings and the embodiments of the present disclosure are only for exemplary purposes, and are not intended to limit the scope of protection of the present disclosure.

It should be understood that the various steps described in the method implementations of the present disclosure may be performed in different orders, and/or performed in parallel. Furthermore, additional steps may be included and/or the execution of the illustrated steps may be omitted in the method implementations. The scope of the present disclosure is not limited in this respect.

The term "include/comprise" used herein and the variations thereof are an open-ended inclusion, namely, "include/comprise but not limited to". The term "based on" is "at least partially based on". The term "an embodiment" means "at least one embodiment". The term "another embodiment" means "at least one another embodiment". The term "some embodiments" means "at least some embodiments". Related definitions of the other terms will be given in the description below.

It should be noted that concepts such as "first" and "second" mentioned in the present disclosure are only used to distinguish different apparatuses, modules, or units, and are not used to limit the sequence of functions performed by these apparatuses, modules, or units or interdependence.

It should be noted that the modifiers "one" and "a plurality of" mentioned in the present disclosure are illustrative and not restrictive, and those skilled in the art should understand that unless the context clearly indicates otherwise, the modifiers should be understood as "one or more".

The names of messages or information exchanged between a plurality of apparatuses in the implementations of the present disclosure are used for illustrative purposes only, and are not used to limit the scope of these messages or information.

It can be understood that before the use of the technical solutions disclosed in the embodiments of the present disclosure, the user shall be informed of the type, range of use, use scenarios, etc., of personal information involved in the present disclosure in an appropriate manner in accordance with the relevant laws and regulations, and the authorization of the user shall be obtained.

For example, in response to reception of an active request from the user, prompt information is sent to the user to clearly inform the user that a requested operation will require access to and use of the personal information of the user. As such, the user can independently choose, based on the prompt information, whether to provide the personal information to software or hardware, such as an electronic device, an application, a server, or a storage medium, that performs operations in the technical solutions of the present disclosure.

As an optional but non-limiting implementation, in response to the reception of the active request from the user, the prompt information may be sent to the user in the form of, for example, a pop-up window, in which the prompt information may be presented in text. Furthermore, the pop-up window may further include a select control for the user to choose whether to "agree" or "disagree" to provide the personal information to the electronic device.

It can be understood that the above process of notifying and obtaining the authorization of the user is only illustrative and does not constitute a limitation on the implementations of the present disclosure, and other manners that satisfy the relevant laws and regulations may also be applied in the implementations of the present disclosure.

It is found through analysis that an interaction method for a live streaming room in the related technologies is relatively simple, and there is lack of association between streamers.

Embodiments of the present disclosure provide an interaction method and apparatus, an electronic device, a storage medium, and a program product, to enrich the existing interaction methods and improve the association between streamers.

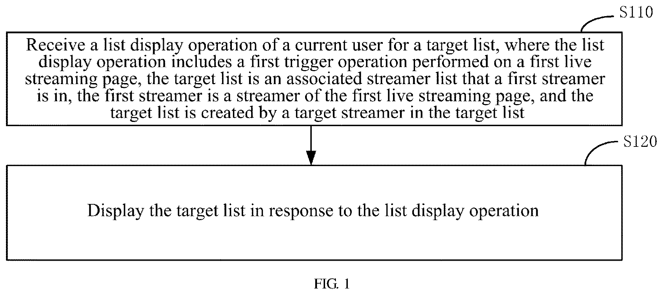

FIG. 1 is a schematic flowchart of an interaction method according to an embodiment of the present disclosure. The method is applicable to a scenario where interaction is performed on a live streaming page. The method may be performed by an interaction apparatus, where the apparatus may be implemented by software and/or hardware, and is generally integrated into an electronic device. In this embodiment, the electronic device includes, but is not limited to: a device such as a mobile phone or a computer.

It can be considered that with the rapid development of the Internet, video applications become increasingly diverse, for example, a live streaming room can be set up in the video application for user interaction. In the existing interaction methods, simultaneous live streaming start and live streaming content association between streamers can only be implemented by means of voiceover, connection between the streamers, a nickname suffix, etc. The interaction methods are relatively simple, lacking account association and mutual referral between the streamers. In addition, a user side cannot quickly learn of different live streaming associated with live streaming content, resulting in poor experience.

Based on this, an embodiment of the present disclosure provides an interaction method that enables a streamer to set an associated live stream, supporting the streamer to create, edit, and manage the associated live stream. When the streamer starts live streaming, the display of an associated live stream in a live streaming room can improve the efficiency of a user discovering and entering a live streaming room with content association, thereby improving viewing experience of the user, and achieving content association and collaborative growth between matrix accounts of streamers. As shown in FIG. 1, an interaction method according to an embodiment of the present disclosure includes the following steps.

S110: Receive a list display operation of a current user for a target list, where the list display operation includes a first trigger operation performed on a first live streaming page, the target list is an associated streamer list that a first streamer is in, the first streamer is a streamer of the first live streaming page, and the target list is created by a target streamer in the target list.

The current user may be a user currently using an electronic device or application. For example, the current user may be any streamer or a viewer watching a live stream.

The list display operation may be an operation of triggering the display of the target list. For example, the list display operation may include the first trigger operation performed on the first live streaming page, where the first live streaming page may be considered as a live streaming page of the first streamer, such as a live streaming room page of a live streaming room of the first streamer. In this case, the first streamer may be a streamer of a live streaming room corresponding to the first live streaming page. The first trigger operation is a preset trigger operation for indicating to display the target list. Specific content of the first trigger operation may be set by related personnel. For example, the first trigger operation may be an operation of triggering a control in the first live streaming page, or an operation of performing a preset gesture on the first live streaming page. The preset gesture may be a gesture set in advance, such as drawing a circle. The list display operation may further include a first trigger operation performed on another page, where the another page may be a page other than the first live streaming page, such as a chat page or a news page, and the first trigger operation may be an operation of triggering preset information in the chat page/news page, where specific content of the preset information may be determined based on an actual situation. Details are not further described in this embodiment. For example, the preset information may be list information of the target list, which may be generated in a manner of sharing the target list, to facilitate a corresponding user in sending or publishing the list information.

When the list display operation is performed on a live streaming page (e.g., the first live streaming page), the target list may be an associated streamer list that a streamer of the live streaming page is in. The associated streamer list that the streamer of the live streaming page is in may be understood as an associated streamer list that the streamer joins, which may include an associated streamer list created by the streamer of the live streaming page and/or an associated streamer list that the streamer of the live streaming page is invited to join. An associated streamer list created by a streamer may be understood as an associated streamer set that is created by the streamer and displayed in the form of a list. For example, the streamer may create an associated streamer set in which members have a first association relationship, and the associated streamer set may be displayed in the form of a list. An associated streamer list that a streamer is invited to join may be understood as an associated streamer set that the streamer is invited to join and displayed in the form of a list. For example, the streamer may be invited to join an associated streamer set to establish a first association relationship with another streamer in the associated streamer set. In this case, the associated streamer list may be considered as a corresponding associated streamer set that is displayed in the form of a list.

In this embodiment, a current application may support the same streamer to be in at most one or a plurality of associated streamer lists at the same time. In a scenario where the current application supports the same streamer to be in a plurality of associated streamer lists, when the streamer of the live streaming page is in only one associated streamer list, the target list is an associated streamer list that the streamer is in; or when the streamer of the live streaming page is in a plurality of associated streamer lists, at least one associated streamer list that the streamer is in may be used as the target list, which may be specifically set as needed. An example in which the current application only supports the same streamer to be in at most one associated streamer list at the same time is used for description below.

When the list display operation is not performed on a live streaming page, for example, when the list display operation is performed on preset information displayed on a chat page or a news page, the target list may be an associated streamer list corresponding to the preset information. The associated streamer list may be considered as a list including a plurality of streamers. There is a first association relationship between streamers in the same associated streamer list. The first association relationship may, for example, be that the streamers have a similar live streaming topic or resource, or the streamers perform targeted live streaming for respective fields. The first association relationship may be established when the corresponding streamers join the associated streamer list. The target streamer may be a streamer that creates an associated streamer list. The target streamer may be the first streamer or another streamer other than the first streamer. The target streamer may be included in the associated streamer list created by the target streamer.

In an embodiment, another streamer in the target list other than the target streamer is invited by the target streamer to join the target list.

It can be considered that the target list includes the target streamer as well as another streamer other than the target streamer. In addition, the another streamer may be invited by the target streamer to join the target list. A manner of inviting the another streamer is not further described herein, as long as the another streamer can be invited to join the target list.

In this embodiment, one streamer may invite one or more other streamers to join an associated streamer list created by the streamer, and when live streaming rooms of at least two streamers in the associated streamer list are in live streaming (i.e., the at least two streamers in the associated streamer list each are in a live streaming state), the live streaming room in live streaming of any streamer in the associated streamer list may guide, through the associated streamer list, a viewer to enter the live streaming room in live streaming of another streamer in the associated streamer list. In addition, the live streaming rooms in live streaming of a plurality of streamers in the associated streamer list may live stream different live streaming content of the same type (e.g., a singing-type live streaming content of different songs), to facilitate the user in acquiring live streaming content of interest, and improve the information acquisition efficiency. Alternatively, when the live streaming room of any streamer in the associated streamer list is not in live streaming, the user is guided to follow another streamer in the associated streamer list.

Specifically, in this step, the list display operation of the current user for the target list may be first received. A manner of receiving the list display operation is not limited, and may be different based on different list display operations. For example, a display key may be set in the application, and the list display operation of the current user for the target list may be received after the user clicks the display key. A list display operation for displaying the target list may alternatively be defined in the application, and after the user performs the list display operation in the application, the application or the electronic device may receive the list display operation of the current user for the target list.

In an embodiment, the first trigger operation is performed on a list identifier of the target list, and before the receiving a list display operation of a current user for a target list, the method further includes: displaying the first live streaming page, and displaying the list identifier of the target list in the first live streaming page.

The list identifier may be understood as an identifier for triggering the indication of displaying the target list. A display style and location of the list identifier are not limited. For example, the list identifier may be displayed in the style of text, or may be displayed in the style of a specific symbol, etc.

It can be considered that before the list display operation of the current user for the target list is received, the first live streaming page may be displayed, and the list identifier of the target list is displayed on the first live streaming page. Based on this, a basis can be provided for the current user to subsequently perform the first trigger operation, to facilitate the current user in quickly viewing the target list.

S120: Display the target list in response to the list display operation.

After the list display operation of the current user for the target list is received, the target list may be displayed in response to the list display operation in this step. The display and display areas of the streamers in the target list may be the same or different. For example, the display of each streamer in the target list may be determined based on a live streaming state of the streamer, and the target list may include a streamer that is live streaming as well as a streamer that is not in a live streaming state. In an embodiment, the target list includes a first area and/or a second area, the first area is used to display first streamer information of a streamer that is in a live streaming state, and the second area is used to display second streamer information of a streamer that is not in a live streaming state.

The first area may be used to display the first streamer information of the streamer that is in the live streaming state, the second area may be used to display the second streamer information of the streamer that is not in the live streaming state, the first streamer information is information of the streamer that is in the live streaming state, the second streamer information is information of the streamer that is not in the live streaming state, and the first streamer information is different from the second streamer information. Specific content may be set by related personnel. For example, if a streamer 1 is live streaming, while a streamer 2 is not live streaming currently, the first streamer information may include an avatar of the streamer 1, a nickname of the streamer 1, the number of viewers in a live streaming room, a live streaming cover image or a live streaming identifier, etc.; and the second streamer information may include an avatar and/or a nickname of the streamer 2, etc.

In an implementation, if all the streamers in the target list are in the live streaming state, only the first area may be included; if none of the streamers in the target list are in the live streaming state, only the second area may be included; or if some of the streamers in the target list are in the live streaming state, and some of the streamers are not in the live streaming state, both the first area and the second area may be included.

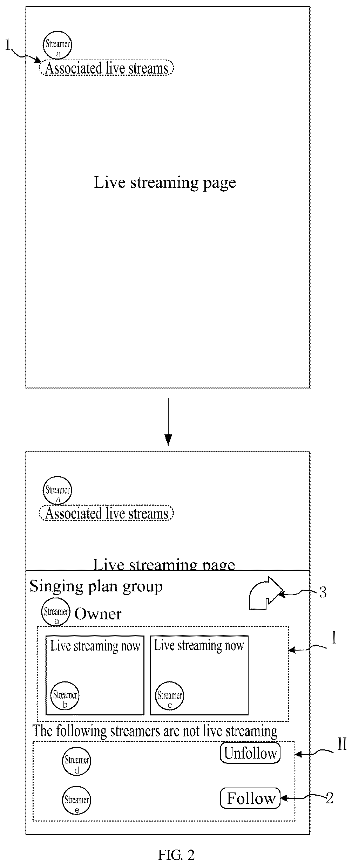

FIG. 2 is a schematic diagram of displaying a target list according to an embodiment of the present disclosure. As shown in FIG. 2, first a trigger control 1 (e.g., "Associated live stream" in FIG. 2, namely a list identifier) may be displayed on a live streaming page (e.g., the first live streaming page) of a streamer a (i.e., a first streamer), and if the current user triggers a click on the trigger control 1, it is considered that the current user has performed the list display operation for the target list, and the application may receive the list display operation of the current user for the target list, and display the target list in response to the list display operation. It can be learned that, in this case, the target list includes a first area I and a second area II, the first area I is used to display first streamer information of a streamer (e.g., streamers b and c) that is in a live streaming state, where the first streamer information includes an avatar and a live streaming identifier (e.g., in live streaming), and the second area II is used to display second streamer information of a streamer (e.g., streamers d and e) that is not in a live streaming state, where the second streamer information includes an avatar. In FIG. 2, an example in which the target list is an associated streamer list created by the streamer a is used. The streamer a is an owner of the target list, that is, the target list is created by the streamer a (i.e., a target streamer).

In an embodiment, after the displaying the target list, the method further includes at least one of the following:
in response to a follow operation for a third streamer in the target list, adding the third streamer to a followed user list of the current user; and
sharing list information of the target list in response to a sharing operation for the target list, where the list information is used to trigger the execution of the list display operation for the target list.

The third streamer may be any streamer in the target list. For example, the third streamer may be a streamer that is live streaming or a streamer that is not live streaming currently. The follow operation may be an operation of adding the third streamer to the followed user list. For example, the follow operation may be an operation of clicking a follow control, where the follow control may be used to add the third streamer to the followed user list of the current user. For example, each streamer in the target list may correspond to a follow control, and a state of the follow control may be distinguished based on whether the current user has added a corresponding streamer to the followed user list. The follow operation may alternatively be an operation of performing a preset operation on the third streamer, where the preset operation may be, for example, an operation of double clicking an avatar of the third streamer. The followed user list is used to display a user that the current user follows.

The sharing operation may be an operation for indicating to share the list information of the target list. For example, the sharing operation may be an operation of clicking a share control of the target list. The list information may be used to trigger the execution of the list display operation for the target list. For example, the list information may be displayed on a message list page of, in a message pop-up window of, on a chat page of, on a friend news page of, on a personal news page of, or on the like of the user.

In an implementation, after the target list is displayed, the third streamer may be added to the followed user list of the current user in response to the follow operation for the third streamer in the target list. Based on this, the current user may quickly view the third streamer through the followed user list. As shown in FIG. 2, the current user may trigger a click on a control 2 to perform the follow operation for the third streamer (i.e., the streamer e) in the target list, and in this embodiment, the streamer e may be added to the followed user list of the current user in response to the follow operation.

In an implementation, after the target list is displayed, the list information of the target list may be shared to another user in response to the sharing operation for the target list. For example, a share control may be displayed in the target list, a sharing panel may be displayed by clicking the share control, and a sharing object (e.g., another user) may be selected on the sharing panel to share the list information. Alternatively, the list information of the target list is shared in the form of dynamic information. The another user may be a user in the current application or a user in another application. Based on this, the current user can share the target list, while the another user or a user who can view the list information shared in the form of dynamic information can view the target list by triggering the execution of the list display operation for the target list, thereby enriching the interaction associated with the target list, simplifying operations required for the another user to view the target list, and enhancing the user experience. As shown in FIG. 2, the current user may trigger a share control 3 to perform the sharing operation for the target list, and in this embodiment, the list information of the target list may be shared in response to the sharing operation, for example, the list information of the target list is shared in the form of chat information or dynamic information.

In addition, a profile card of a corresponding streamer may be opened by clicking a non-control area of the streamer, for example, by clicking a non-control location in a display area in which the streamer is in the target list, and related information of the streamer may be displayed in the profile card.

An embodiment of the present disclosure provides an interaction method, including: receiving a list display operation of a current user for a target list, where the list display operation includes a first trigger operation performed on a first live streaming page, the target list is an associated streamer list that a first streamer is in, the first streamer is a streamer of the first live streaming page, and the target list is created by a target streamer in the target list; and displaying the target list in response to the list display operation. According to the method, the associated streamer list that the first streamer is in can be displayed in response to the list display operation of the current user for the target list, where the associated streamer list improves the association between streamers, thereby enriching the existing interaction methods.

In an embodiment, the current user is the target streamer, and the interaction method further includes at least one of the following:
sending invitation information to a fourth streamer in response to an associated streamer invitation operation of the current user, where the fourth streamer is a streamer corresponding to the streamer invitation operation, and the invitation information is used to invite the fourth streamer to join the target list;
removing a fifth streamer from the target list in response to an associated streamer removal operation of the current user, where the fifth streamer is a streamer corresponding to the streamer removal operation; and
clearing and deleting the target list in response to a list deletion operation of the current user for the target list.

The associated streamer invitation operation may be an operation of inviting a streamer to join the associated streamer list. For example, the associated streamer invitation operation may be an operation of clicking an invite control corresponding to a streamer. The fourth streamer may be a streamer that is not in the target list, and may correspond to the streamer invitation operation. The invitation information may be used to invite the fourth streamer to join the target list, and specific content of the invitation information is not limited.

The associated streamer removal operation may be an operation of removing a streamer in the streamer list from the target list. For example, the associated streamer removal operation may be an operation of clicking a remove control corresponding to a streamer. The fifth streamer may be any streamer in the target list other than the target streamer, and may correspond to the streamer removal operation. The list deletion operation may be an operation of clearing and deleting the target list, for example, an operation of disassociating the streamers from each other in the associated streamer list. For example, the list deletion operation may be an operation of clicking a delete control/disband control corresponding to the associated streamer list.

In an implementation, when the current user is the target streamer, in this embodiment, the invitation information may be sent to the fourth streamer in response to the associated streamer invitation operation of the current user, to invite the fourth streamer to join the target list.

In an implementation, when the current user is the target streamer, in this embodiment, the fifth streamer may further be removed from the target list in response to the associated streamer removal operation of the current user, to manage the streamer in the target list.

In an implementation, when the current user is the target streamer, in this embodiment, the target list may further be cleared and deleted, for example, the target list is disbanded, in response to the list deletion operation of the current user for the target list, and a first association relationship between the streamers in the target list may be severed, where the first association relationship is an association relationship corresponding to the target list. For example, an associated streamer list P includes a streamer 1, a streamer 2, and a streamer 3, and an associated streamer list Q includes the streamer 1, the streamer 3, and a streamer 4. In response to a list deletion operation of a streamer that creates the associated streamer list P for the associated streamer list P, the associated streamer list P may be disbanded, and an association relationship among the streamer 1, the streamer 2, and the streamer 3 may be severed without affecting an association relationship among the streamer 1 and the streamer 3 in the associated streamer list Q.

In an embodiment, before the sending invitation information to a fourth streamer in response to an associated streamer invitation operation of the current user, the interaction method further includes:
displaying a preset control in response to a second trigger operation performed on the first live streaming page; displaying a list control in response to a third trigger operation for the preset control; and
in response to a trigger operation for the list control, displaying a to-be-invited streamer list, and displaying at least one to-be-invited streamer identifier and at least one invite control in the to-be-invited streamer list, where the invite control is used to trigger the execution of the associated streamer invitation operation.

The second trigger operation may be used to indicate to display the preset control, for example, an operation of clicking a key in the first live streaming page. The preset control may be a control for triggering the display of the list control, where the list control may be used to indicate to display the to-be-invited streamer list. The to-be-invited streamer list may be considered as a list for inviting a streamer. For example, at least one to-be-invited streamer identifier and at least one invite control may be displayed in the to-be-invited streamer list, a to-be-invited streamer may have a second association relationship with the target streamer, the second association relationship may be, for example, friends, etc., and the second association relationship is different from the first association relationship. An invited streamer identifier or an associated streamer identifier may further be displayed in the to-be-invited streamer list.

The to-be-invited streamer identifier may be an identifier of a streamer that has not been invited, such as an avatar and/or a nickname, etc. The invite control may be used to trigger the execution of the associated streamer invitation operation. The number of invite controls is not limited. For example, there may be one invite control for triggering the execution of the associated streamer invitation operation of a selected to-be-invited streamer. The invite control may be in a one-to-one correspondence with the to-be-invited streamer identifier to trigger the associated streamer invitation operation of the corresponding to-be-invited streamer.

Specifically, before the sending invitation information to a fourth streamer in response to an associated streamer invitation operation of the current user, the preset control may be displayed in response to the second trigger operation performed on the first live streaming page, and then the list control may be displayed in response to the third trigger operation for the preset control. When the current user triggers the list control, in this embodiment, the to-be-invited streamer list may be displayed in response to the trigger operation for the list control, and at least one to-be-invited streamer identifier and at least one invite control may be displayed in the to-be-invited streamer list, to receive the associated streamer invitation operation of the current user. A manner of displaying the list control may be different based on whether a target list currently exists or not. For example, in an implementation, if a target list exists currently, the list control may be displayed on an associated panel, to trigger the list control to display the to-be-invited streamer list. In an implementation, if no target list exists currently, the list control may be displayed in another panel or window, to trigger the list control to display the to-be-invited streamer list, and a target list is further created when the invite control is triggered or the associated streamer invitation operation is received.

In an embodiment, the current user is a streamer in the target list other than the target streamer, and the interaction method further includes:
removing the current user from the target list in response to an exit operation of the current user for the target list.

The exit operation may be an operation of existing the target list. For example, the exit operation may be an operation of clicking an exit control.

In an implementation, when the current user is a streamer in the target list other than the target streamer, in this embodiment, the current user may further be removed from the target list in response to the exit operation of the current user for the target list, to meet a requirement of the current user for exit from the target list.

It can be considered that a page on which the associated streamer invitation operation, the associated streamer removal operation, the list deletion operation, and the exit operation are performed is not limited, and may be specifically determined based on an actual requirement. For example, the above operations may be performed on a page in which the target list is, or may be performed on the associated panel, where the associated panel is used to adjust the target list. For example, the streamer in the target list may be adjusted in the associated panel, the fourth streamer is enabled to join the target list through the associated streamer invitation operation, the fifth streamer is removed from the target list through the associated streamer removal operation, and automatic exit from the target list is implemented through the exit operation. Alternatively, the target list may be cleared and deleted in the associated panel. For example, the target list is cleared and deleted through the list deletion operation.

In an implementation, a name of the list identifier or target list and an introduction to the target list may further be added to the associated panel and displayed in the target list. A default name of the list identifier or target list is "Associated live stream". The target streamer may make modification or addition of the name and the introduction in an input box, and after the target streamer clicks Done, a pop-up window "The introduction will be displayed after approval" is displayed, to upload the modification or addition to a backend for review by backend review personnel.

Display timing of the associated panel is not limited in this embodiment. For example, when the current user is any streamer in the target list, a display key may be triggered in a live streaming page of the current user to display the associated panel. A display location and style of the triggered display key may be determined based on an actual situation of the live streaming page.

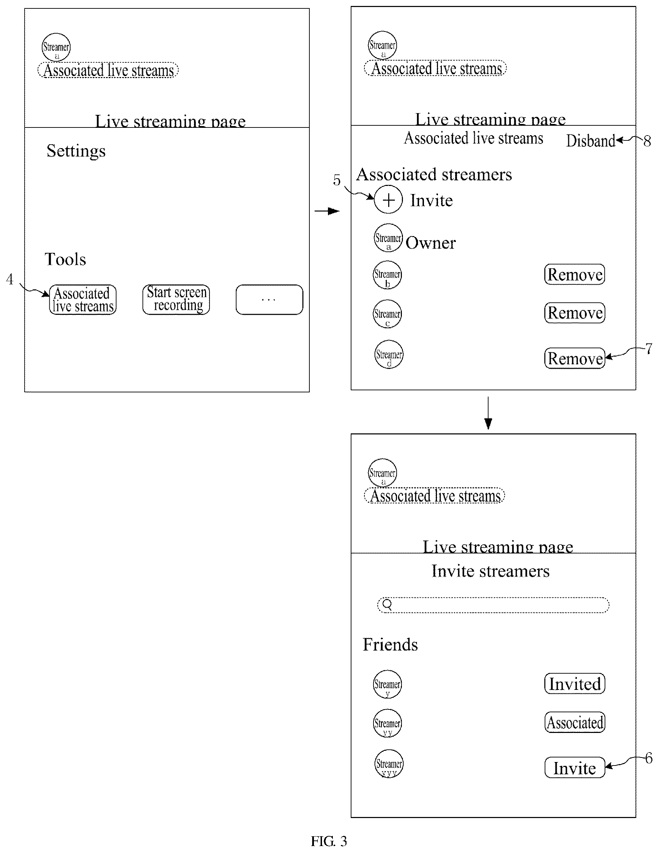

FIG. 3 is a schematic diagram of displaying an associated panel according to an embodiment of the present disclosure. As shown in FIG. 3, for example, when the current user is the target streamer, in a live streaming page (e.g., in the live streaming page of the current user), a preset control (i.e., "Associated live stream" in FIG. 3) may be displayed in response to a second trigger operation performed on the live streaming page, and the current user may indicate, by triggering a preset control 4, a current application to display the associated panel. When the target streamer clicks a list control 5 on the associated panel, the current panel may be closed, and the to-be-invited streamer list may be opened. After the to-be-invited streamer list is opened, the current user may trigger an invite control 6 to perform the associated streamer invitation operation, and in this embodiment, the invitation information may be sent to a streamer yyy (i.e., the fourth streamer) in response to the associated streamer invitation operation, to invite the fourth streamer to join the target list, and at the same time, the invite control 6 changes to "Invited", and a pop-up window "An invitation has been sent to TA" appears. If the invitation fails, a pop-up window "Invitation failed, please try again later" or "This streamer has joined another associated streamer" appears. When the maximum number of invitations is reached, a pop-up window "Invitation failed, reaching the maximum number of invitations" may appear.

In addition, on the streamer yyy side, the invitation information may be first displayed in the form of a pop-up window, and if the streamer yyy clicks the pop-up window or clicks "Reply" in the pop-up window, a message list page is opened to display the invitation information in the form of a session. The pop-up window may be automatically closed after preset duration, or the user may manually close the pop-up window through an upward flick gesture, and after the pop-up window is closed, the invitation information is displayed on the message list page.

In addition, a search box in the invited streamer list may change to a search state by clicking the search box; and the associated panel may be closed by clicking a non-control area in the invited streamer list.

As shown in FIG. 3, when it is detected that the target streamer clicks a remove control 7 corresponding to the streamer d on the associated panel, it may be considered that the target streamer has performed the associated streamer removal operation, and in this embodiment, the streamer d (i.e., the fifth streamer) may be removed from the target list in response to the associated streamer removal operation.

As shown in FIG. 3, when it is detected that the target streamer clicks a disband control 8 on the associated panel, it may be considered that the target streamer has performed the list deletion operation for the target list, and in this embodiment, the target list may be cleared and deleted in response to the list deletion operation.

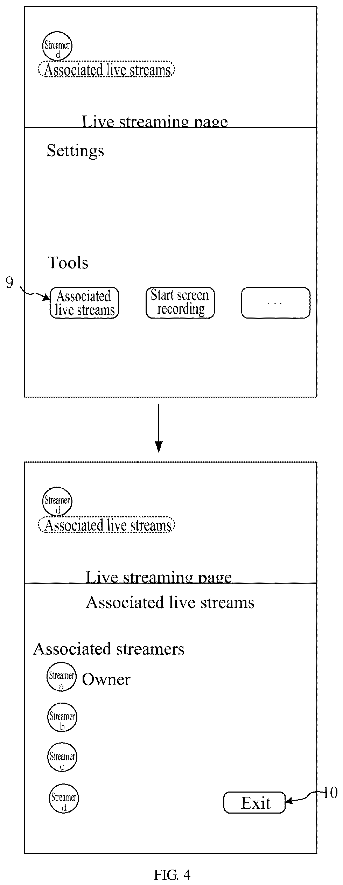

FIG. 4 is another schematic diagram of displaying an associated panel according to an embodiment of the present disclosure. As shown in FIG. 4, when the current user is a streamer in the target list other than the target streamer, for example, the current user is the streamer d, the streamer d may indicate, by triggering a display control 9 (i.e., "Associated live stream" in FIG. 4) in the live streaming page, the current application to display the associated panel; and when it is detected that the streamer d clicks an exit control 11 on the associated panel, it may be considered that the streamer d has performed the exit operation for the target list, and in this embodiment, the streamer d may be removed from the target list in response to the exit operation, that is, the streamer d exits from the target list.

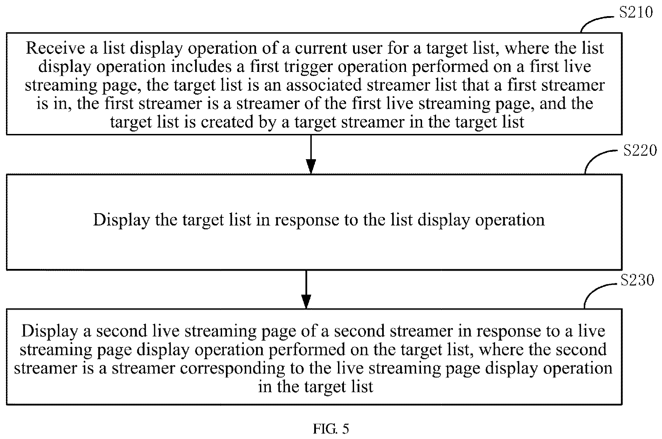

FIG. 5 is a schematic flowchart of another interaction method according to an embodiment of the present disclosure. The solution in this embodiment may be combined with one or more optional solutions in the above embodiments. Optionally, after the displaying the target list, the method further includes: displaying a second live streaming page of a second streamer in response to a live streaming page display operation performed on the target list, where the second streamer is a streamer corresponding to the live streaming page display operation in the target list. As shown in FIG. 5, the method includes steps S210 to S230.

S210: Receive a list display operation of a current user for a target list, where the list display operation includes a first trigger operation performed on a first live streaming page, the target list is an associated streamer list that a first streamer is in, the first streamer is a streamer of the first live streaming page, and the target list is created by a target streamer in the target list.

S220: Display the target list in response to the list display operation.

S230: Display a second live streaming page of a second streamer in response to a live streaming page display operation performed on the target list, where the second streamer is a streamer corresponding to the live streaming page display operation in the target list.

The live streaming page display operation may be used to display the second live streaming page of the second streamer. The live streaming page display operation may be performed on a location corresponding to the second streamer in the target list, for example, may be performed on any location at which a card of the second streamer is displayed in the target list. The second streamer may be considered as a streamer that is in a live streaming state in the target list, and the second live streaming page is a live streaming page of the second streamer.

It should be noted that, in this embodiment, the current user is not the streamer that is in the live streaming state in the target list. For example, the current user may be a streamer that is not in a live streaming state in the target list, or a streamer or viewer, etc. in the target list.

Specifically, in this embodiment, the second live streaming page of the second streamer may be displayed in response to the live streaming page display operation performed on the target list, to enable the current user to view the second live streaming page. A method for displaying the second live streaming page is not limited. For example, the second live streaming page may be directly displayed, and user-related information may further be displayed in a live streaming room of the second streamer while the second live streaming page is displayed, to inform that the current user enters the live streaming room. Specific content of the user-related information is not limited, and may be preset by related personnel, etc.

In an embodiment, the displaying a second live streaming page of a second streamer includes: displaying the second live streaming page of the second streamer, and displaying preset prompt information in the live streaming room of the second streamer, where the preset prompt information is used to inform that the current user enters the live streaming room of the second streamer based on the target list.

The preset prompt information may be prompt information set in advance, which is used to inform that the current user enters the live streaming room of the second streamer based on the target list.

In an implementation, the preset prompt information may be displayed in the live streaming room of the second streamer while the second live streaming page is displayed, to inform that the current user enters the live streaming room of the second streamer based on the target list. A specific location and manner of displaying the preset prompt information are not limited. For example, the preset prompt information may be displayed in a comment area of the live streaming room. The preset prompt information may be visible to any user in the live streaming room.

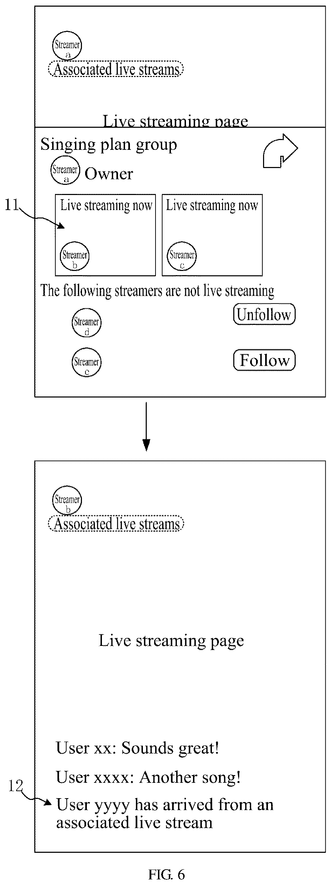

FIG. 6 is a schematic diagram of displaying a second live streaming page according to an embodiment of the present disclosure. As shown in FIG. 6, in the target list, a viewer (e.g., a user yyyy) may trigger a control 11 in the target list to perform the live streaming page display operation performed on the target list, where the live streaming page display operation corresponds to the streamer b (i.e., the second streamer), and in this embodiment, the second live streaming page of the streamer b may be displayed in response to the live streaming page display operation, and at the same time, preset prompt information 12 (i.e., "User yyyy has arrived from an associated live stream" in FIG. 6) is displayed in the live streaming room of the second streamer, to inform that the user yyyy enters this live streaming room based on the target list, that is, to inform a path through which the user yyyy enters the live streaming room.

According to an interaction method provided in the embodiments of the present disclosure, a list display operation of a current user for a target list is received, where the list display operation includes a first trigger operation performed on a first live streaming page, the target list is an associated streamer list that a first streamer is in, the first streamer is a streamer of the first live streaming page, and the target list is created by a target streamer in the target list; the target list is displayed in response to the list display operation; and a second live streaming page of a second streamer is displayed in response to a live streaming page display operation performed on the target list, where the second streamer is a streamer corresponding to the live streaming page display operation in the target list. According to the method, the second live streaming page of the second streamer can be displayed in response to the live streaming page display operation performed on the target list, thereby guiding the user to view more live streaming pages with content association through the association between streamers, and improving the experience.

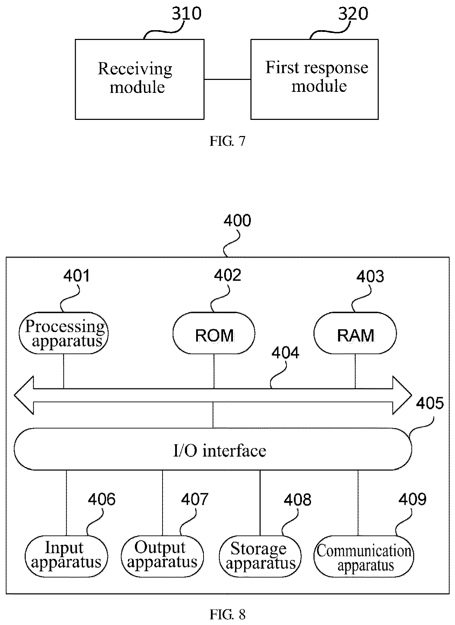

FIG. 7 is a schematic diagram of a structure of an interaction apparatus according to an embodiment of the present disclosure. The apparatus is applicable to a scenario where interaction is performed on a live streaming page. The apparatus may be implemented by software and/or hardware, and is generally integrated into an electronic device.

As shown in FIG. 7, the apparatus includes:
a receiving module 310 configured to receive a list display operation of a current user for a target list, where the list display operation includes a first trigger operation performed on a first live streaming page, the target list is an associated streamer list that a first streamer is in, the first streamer is a streamer of the first live streaming page, and the target list is created by a target streamer in the target list; and
a first response module 320 configured to display the target list in response to the list display operation.

According to an interaction apparatus provided in the embodiments of the present disclosure, a list display operation of a current user for a target list is received through a receiving module, where the list display operation includes a first trigger operation performed on a first live streaming page, the target list is an associated streamer list that a first streamer is in, the first streamer is a streamer of the first live streaming page, and the target list is created by a target streamer in the target list; and the target list is displayed through a first response module in response to the list display operation. According to the apparatus, the associated streamer list that the first streamer is in can be displayed in response to the list display operation of the current user for the target list, where the associated streamer list improves the association between streamers, thereby enriching the existing interaction methods.

Optionally, an interaction apparatus provided in the embodiments of the present disclosure further includes:
a second response module configured to: after the displaying the target list, display a second live streaming page of a second streamer in response to a live streaming page display operation performed on the target list, where the second streamer is a streamer corresponding to the live streaming page display operation in the target list.

Optionally, the first response module 320 is specifically configured to:
display the second live streaming page of the second streamer, and display preset prompt information in a live streaming room of the second streamer, where the preset prompt information is used to inform that the current user enters the live streaming room of the second streamer based on the target list.

Optionally, the second streamer is a streamer that is in a live streaming state in the target list, and the current user is not a streamer that is in a live streaming state in the target list.

Optionally, an interaction apparatus provided in the embodiments of the present disclosure further includes at least one of the following:
a third response module configured to: after the displaying the target list, in response to a follow operation for a third streamer in the target list, add the third streamer to a followed user list of the current user; and
a fourth response module configured to: after the displaying the target list, share list information of the target list in response to a sharing operation for the target list, where the list information is used to trigger the execution of the list display operation for the target list.

Optionally, the first trigger operation is performed on a list identifier of the target list, and an interaction apparatus provided in the embodiments of the present disclosure further includes:
a display module configured to: before the receiving a list display operation of a current user for a target list, display the first live streaming page, and display the list identifier of the target list in the first live streaming page.

Optionally, the current user is the target streamer, and an interaction apparatus provided in the embodiments of the present disclosure further includes at least one of the following:
a fifth response module configured to send invitation information to a fourth streamer in response to an associated streamer invitation operation of the current user, where the fourth streamer is a streamer corresponding to the streamer invitation operation, and the invitation information is used to invite the fourth streamer to join the target list;
a sixth response module configured to remove a fifth streamer from the target list in response to an associated streamer removal operation of the current user, where the fifth streamer is a streamer corresponding to the streamer removal operation; and
a seventh response module configured to clear and delete the target list in response to a list deletion operation of the current user for the target list.

Optionally, an interaction apparatus provided in the embodiments of the present disclosure further includes:
an eighth response module configured to: before the sending invitation information to a fourth streamer in response to an associated streamer invitation operation of the current user, display a preset control in response to a second trigger operation performed on the first live streaming page;
a ninth response module configured to: before the sending invitation information to a fourth streamer in response to an associated streamer invitation operation of the current user, display a list control in response to a third trigger operation for the preset control; and
a tenth response module configured to: before the sending invitation information to a fourth streamer in response to an associated streamer invitation operation of the current user, in response to a trigger operation for the list control, display a to-be-invited streamer list, and display at least one to-be-invited streamer identifier and at least one invite control in the to-be-invited streamer list, where the invite control is used to trigger the execution of the associated streamer invitation operation.

Optionally, the current user is a streamer in the target list other than the target streamer, and an interaction apparatus provided in the embodiments of the present disclosure further includes:
an eleventh response module configured to remove the current user from the target list in response to an exit operation of the current user for the target list.

Optionally, the target list includes a first area and/or a second area, the first area is used to display first streamer information of a streamer that is in a live streaming state, and the second area is used to display second streamer information of a streamer that is not in a live streaming state.

The above interaction apparatus may perform the interaction method provided in any one of the embodiments of the present disclosure, and has corresponding functional modules and beneficial effects for performing the method.

Reference is made to FIG. 8 below, which is a schematic diagram of a structure of an electronic device 400 suitable for implementing an embodiment of the present disclosure. A terminal device in this embodiment of the present disclosure may include, but is not limited to, mobile terminals such as a mobile phone, a notebook computer, a digital broadcast receiver, a personal digital assistant (PDA), a tablet computer (PAD), a portable media player (PMP), and a vehicle-mounted terminal (e.g., a vehicle navigation terminal), and fixed terminals such as a digital TV and a desktop computer. The electronic device shown in FIG. 8 is merely an example, and shall not impose any limitation on the function and scope of use of the embodiments of the present disclosure.

As shown in FIG. 8, the electronic device 400 may include a processing apparatus (e.g., a central processing unit or a graphics processing unit) 401 that may perform a variety of appropriate actions and processing in accordance with a program stored in a read-only memory (ROM) 402 or a program loaded from a storage apparatus 408 into a random access memory (RAM) 403. The RAM 403 further stores various programs and data required for the operation of the electronic device 400. The processing apparatus 401, the ROM 402, and the RAM 403 are connected to one another through a bus 404. An input/output (I/O) interface 405 is also connected to the bus 404.

Generally, the following apparatuses may be connected to the I/O interface 405: an input apparatus 406 including, for example, a touchscreen, a touchpad, a keyboard, a mouse, a camera, a microphone, an accelerometer, and a gyroscope; an output apparatus 407 including, for example, a liquid crystal display (LCD), a speaker, and a vibrator; the storage apparatus 408 including, for example, a tape and a hard disk; and a communication apparatus 409. The communication apparatus 409 may allow the electronic device 400 to perform wireless or wired communication with other devices to exchange data. Although FIG. 8 shows the electronic device 400 having various apparatuses, it should be understood that it is not required to implement or have all of the shown apparatuses. It may be an alternative to implement or have more or fewer apparatuses.

In particular, according to an embodiment of the present disclosure, the process described above with reference to the flowchart may be implemented as a computer software program. For example, this embodiment of the present disclosure includes a computer program product, which includes a computer program carried on a non-transitory computer-readable medium, where the computer program includes program code for performing the method shown in the flowchart. In such an embodiment, the computer program may be downloaded from a network through the communication apparatus 409 and installed, installed from the storage apparatus 408, or installed from the ROM 402. When the computer program is executed by the processing apparatus 401, the above-mentioned functions defined in the method of the embodiment of the present disclosure are performed.

It should be noted that the above computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. More specific examples of the computer-readable storage medium may include, but are not limited to: an electrical connection having one or more wires, a portable computer magnetic disk, a hard disk, a random access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may further be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), etc., or any suitable combination thereof.

In some implementations, a client and a server may communicate using any currently known or future-developed network protocol such as the hypertext transfer protocol (HTTP), and may be connected to digital data communication (for example, a communication network) in any form or medium. Examples of the communication network include a local area network ("LAN"), a wide area network ("WAN"), an internetwork (for example, the Internet), a peer-to-peer network (for example, an ad hoc peer-to-peer network), and any currently known or future-developed network.

The above computer-readable medium may be contained in the above electronic device. Alternatively, the computer-readable medium may exist independently, without being assembled into the electronic device.

The above computer-readable medium carries one or more programs that, when executed by the electronic device, cause the electronic device to: receive a list display operation of a current user for a target list, where the list display operation includes a first trigger operation performed on a first live streaming page, the target list is an associated streamer list that a first streamer is in, the first streamer is a streamer of the first live streaming page, and the target list is created by a target streamer in the target list; and display the target list in response to the list display operation.

Computer program code for performing operations of the present disclosure can be written in one or more programming languages or a combination thereof, where the programming languages include but are not limited to object-oriented programming languages, such as Java, Smalltalk, and C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user through any kind of network, including a local area network (LAN) or a wide area network (WAN), or may be connected to an external computer (for example, connected through the Internet with the aid of an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. The name of a module does not constitute a limitation on the unit itself in some cases.

The functions described herein above may be performed at least partially by one or more hardware logic components. For example, without limitation, exemplary types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

According to one or more embodiments of the present disclosure, Example 1 provides an interaction method, including:
receiving a list display operation of a current user for a target list, where the list display operation includes a first trigger operation performed on a first live streaming page, the target list is an associated streamer list that a first streamer is in, the first streamer is a streamer of the first live streaming page, and the target list is created by a target streamer in the target list; and
displaying the target list in response to the list display operation.

According to one or more embodiments of the present disclosure, Example 2 provides the method according to Example 1, where after the displaying the target list, the method further includes:
displaying a second live streaming page of a second streamer in response to a live streaming page display operation performed on the target list, where the second streamer is a streamer corresponding to the live streaming page display operation in the target list.

According to one or more embodiments of the present disclosure, Example 3 provides the method according to Example 2, where the displaying a second live streaming page of a second streamer includes: displaying the second live streaming page of the second streamer, and displaying preset prompt information in the live streaming room of the second streamer, where the preset prompt information is used to inform that the current user enters the live streaming room of the second streamer based on the target list.

According to one or more embodiments of the present disclosure, Example 4 provides the method according to Example 2, where the second streamer is a streamer that is in a live streaming state in the target list, and the current user is not a streamer that is in a live streaming state in the target list.

According to one or more embodiments of the present disclosure, Example 5 provides the method according to Example 1, where after the displaying the target list, the method further includes at least one of the following:
in response to a follow operation for a third streamer in the target list, adding the third streamer to a followed user list of the current user; and
sharing list information of the target list in response to a sharing operation for the target list, where the list information is used to trigger the execution of the list display operation for the target list.

According to one or more embodiments of the present disclosure, Example 6 provides the method according to Example 1, where the first trigger operation is performed on a list identifier of the target list, and before the receiving a list display operation of a current user for a target list, the method further includes: displaying the first live streaming page, and displaying the list identifier of the target list in the first live streaming page.

According to one or more embodiments of the present disclosure, Example 7 provides the method according to any one of Examples 1 to 6, where the current user is the target streamer, and the method further includes at least one of the following:
sending invitation information to a fourth streamer in response to an associated streamer invitation operation of the current user, where the fourth streamer is a streamer corresponding to the streamer invitation operation, and the invitation information is used to invite the fourth streamer to join the target list;
removing a fifth streamer from the target list in response to an associated streamer removal operation of the current user, where the fifth streamer is a streamer corresponding to the streamer removal operation; and
clearing and deleting the target list in response to a list deletion operation of the current user for the target list.

According to one or more embodiments of the present disclosure, Example 8 provides the method according to Example 7, where before the sending invitation information to a fourth streamer in response to an associated streamer invitation operation of the current user, the method further includes:
displaying a preset control in response to a second trigger operation performed on the first live streaming page;
displaying a list control in response to a third trigger operation for the preset control; and
in response to a trigger operation for the list control, displaying a to-be-invited streamer list, and displaying at least one to-be-invited streamer identifier and at least one invite control in the to-be-invited streamer list, where the invite control is used to trigger the execution of the associated streamer invitation operation.

According to one or more embodiments of the present disclosure, Example 9 provides the method according to any one of Examples 1 to 6, where the current user is a streamer in the target list other than the target streamer, and the method further includes:
removing the current user from the target list in response to an exit operation of the current user for the target list.

According to one or more embodiments of the present disclosure, Example 10 provides the method according to any one of Examples 1 to 6, where the target list includes a first area and/or a second area, the first area is used to display first streamer information of a streamer that is in a live streaming state, and the second area is used to display second streamer information of a streamer that is not in a live streaming state.

According to one or more embodiments of the present disclosure, Example 11 provides an interaction apparatus, including:
a receiving module configured to receive a list display operation of a current user for a target list, where the list display operation includes a first trigger operation performed on a first live streaming page, the target list is an associated streamer list that a first streamer is in, the first streamer is a streamer of the first live streaming page, and the target list is created by a target streamer in the target list; and
a response module configured to display the target list in response to the list display operation.

According to one or more embodiments of the present disclosure, Example 12 provides an electronic device, including:
one or more processors; and
a memory configured to store one or more programs, where
where the one or more programs, when executed by the one or more processors, cause the one or more processors to implement the interaction method according to any one of Examples 1 to 10.

According to one or more embodiments of the present disclosure, Example 13 provides a computer-readable storage medium having a computer program stored thereon, where the computer program, when executed by a processor, causes the interaction method according to any one of Examples 1 to 10 to be implemented.

According to one or more embodiments of the present disclosure, Example 14 provides a computer program product that, when executed by a computer, causes the computer to implement the interaction method according to any one of Examples 1 to 10.

According to one or more embodiments of the present disclosure, Example 15 provides a computer program, including: instructions that, when executed by a processor, cause the processor to perform the interaction method according to any one of Examples 1 to 10.

The foregoing descriptions are merely preferred embodiments of the present disclosure and explanations of the applied technical principles. Those skilled in the art should understand that the scope of disclosure involved in the present disclosure is not limited to the technical solutions formed by specific combinations of the foregoing technical features, and shall also cover other technical solutions formed by any combination of the foregoing technical features or equivalent features thereof without departing from the foregoing concept of disclosure. For example, a technical solution formed by a replacement of the foregoing features with technical features with similar functions disclosed in the present disclosure (but not limited thereto) also falls within the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the foregoing discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. In contrast, the specific features and actions described above are merely exemplary forms of implementing the claims.

## Claims

1. An interaction method, comprising:
receiving a list display operation of a current user for a target list, wherein the list display operation comprises a first trigger operation performed on a first live streaming page, the target list is an associated streamer list that a first streamer is in, the first streamer is a streamer of the first live streaming page, and the target list is created by a target streamer in the target list; and
displaying the target list in response to the list display operation.

2. The method according to claim 1, further comprising:
after displaying the target list, displaying a second live streaming page of a second streamer in response to a live streaming page display operation performed on the target list, wherein the second streamer is a streamer corresponding to the live streaming page display operation in the target list.

3. The method according to claim 2, wherein the displaying a second live streaming page of a second streamer comprises:
displaying the second live streaming page of the second streamer, and displaying preset prompt information in a live streaming room of the second streamer, wherein the preset prompt information is used to inform that the current user enters the live streaming room of the second streamer based on the target list.

4. The method according to claim 2 or 3, wherein the second streamer is a streamer that is in a live streaming state in the target list, and the current user is not a streamer that is in a live streaming state in the target list.

5. The method according to any one of claims 1 to 4, further comprising at least one of the following:
after displaying the target list, in response to a follow operation for a third streamer in the target list, adding the third streamer to a followed user list of the current user; and
after displaying the target list, sharing list information of the target list in response to a sharing operation for the target list, wherein the list information is used to trigger the execution of the list display operation for the target list.

6. The method according to any one of claims 1 to 5, wherein the first trigger operation is performed on a list identifier of the target list, and the method further comprises:
before the receiving a list display operation of a current user for a target list, displaying the first live streaming page, and displaying the list identifier of the target list in the first live streaming page.

7. The method according to any one of claims 1 to 6, wherein the current user is the target streamer, and the method further comprises at least one of the following:
sending invitation information to a fourth streamer in response to an associated streamer invitation operation of the current user, wherein the fourth streamer is a streamer corresponding to the streamer invitation operation, and the invitation information is used to invite the fourth streamer to join the target list;
removing a fifth streamer from the target list in response to an associated streamer removal operation of the current user, wherein the fifth streamer is a streamer corresponding to the streamer removal operation; and
clearing and deleting the target list in response to a list deletion operation of the current user for the target list.

8. The method according to claim 7, further comprising:
before the sending invitation information to a fourth streamer in response to an associated streamer invitation operation of the current user, displaying a preset control in response to a second trigger operation performed on the first live streaming page;
displaying a list control in response to a third trigger operation for the preset control; and
in response to a trigger operation for the list control, displaying a to-be-invited streamer list, and displaying at least one to-be-invited streamer identifier and at least one invite control in the to-be-invited streamer list, wherein the invite control is used to trigger the execution of the associated streamer invitation operation.

9. The method according to any one of claims 1 to 8, wherein the current user is a streamer in the target list other than the target streamer, and the method further comprises:
removing the current user from the target list in response to an exit operation of the current user for the target list.

10. The method according to any one of claims 1 to 9, wherein the target list comprises a first area and/or a second area, the first area is used to display first streamer information of a streamer that is in a live streaming state, and the second area is used to display second streamer information of a streamer that is not in a live streaming state.

11. An interaction apparatus, comprising:
a receiving module configured to receive a list display operation of a current user for a target list, wherein the list display operation comprises a first trigger operation performed on a first live streaming page, the target list is an associated streamer list that a first streamer is in, the first streamer is a streamer of the first live streaming page, and the target list is created by a target streamer in the target list; and
a first response module configured to display the target list in response to the list display operation.

12. An electronic device, comprising:
at least one processor; and
a memory communicatively connected to the at least one processor, wherein
the memory stores a computer program executable by the at least one processor, and the computer program, when executed by the at least one processor, causes the at least one processor to perform the interaction method according to any one of claims 1 to 10.

13. A computer-readable storage medium storing computer instructions that, when executed by a processor, cause the interaction method according to any one of claims 1 to 10 to be implemented.

14. A computer program product, comprising a computer program that, when executed by a processor, causes the interaction method according to any one of claims 1 to 10 to be implemented.

15. A computer program, comprising
instructions that, when executed by a processor, cause the processor to perform the interaction method according to any one of claims 1 to 10.
